# EUROPEAN PATENT SPECIFICATION

(11) **EP 0 813 443 B1**
(45) Date of publication and mention of the grant of the patent: **20.09.2000**
(21) Application number: 96905930.2
(22) Date of filing: 08.03.1996
(51) Int. Cl.: B01D 35/10, B01D 17/04, B01D 29/15

(54) **APPARATUS FOR FILTERING AND COALESCING LIQUIDS**
VORRICHTUNG ZUM FILTERN UND KOALESZIEREN VON FLÜSSIGKEITEN
DISPOSITIF DE FILTRATION ET DE COALESCENCE DE LIQUIDES

(30) Priority: 09.03.1995 GB 9504768
(43) Date of publication of application: 29.12.1997
(73) Proprietor: Kalsep Limited, Camberley, Surrey, GU15 3DF (GB)
(72) Inventor: COSGROVE, Ronald, Charles, Hampshire GU34 5DH (GB); PEARCE, Graeme Keith, Surrey GU17 8PU (GB); GREGORY, Geoffery, Middlesex TW14 9NX (GB); PHILLIPS, Edwin, David, Surey GU9 0JJ (GB); GOUGH, Andrew, West Sussex RH12 2BB (GB)
(74) Representative: Lucas, Brian Ronald
(86) International application number: GB9600542
(87) International publication number: WO9628235

(56) References cited:
- EP-A- 0 366 362
- DE-A- 2 751 476

## Description

The present invention relates to apparatus for filtering solids from liquids or for coalescing droplets of one liquid dispersed in another liquid.

EP 207797 discloses apparatus for removing contaminants from a liquid. The apparatus comprises fibres connected at each end, to end supports, which may be moved away from or towards each other to place the fibres under tension or to relax any applied tension. The end supports can also be rotated relative to each other. The fibres are attached to the end supports so as to form a tube of fibres surrounding a central tubular core provided with perforations. The liquid to be treated passes across the fibres between the central core and an outer compartment surrounding the fibres. In use, the end supports are moved towards one another and rotated relative to one another to twist the fibres and to compress them against the perforated tube.

A disadvantage of using perforated tubes is that they may impose a restriction on the flow through the apparatus thereby leading to an increased pressure drop if the rate of flow is to be sustained.

EP 360601 discloses an apparatus for removing contaminants from liquids which addresses this problem by using a helical spring to provide adequate support for the tubular fibrous filter both during use and during the backwash procedure for removing the impurities from the apparatus. The radial strength of the helical spring is sufficient to support the fibres against the force exerted by the pressure differential in the bed of fibres forming the tubular filter as it contracts under the torsional stress applied by relative rotation of the end supports.

However, with larger sizes of equipment with greater throughputs, the strength of spring needed requires to be made of a wire of gauge of such weight that it becomes impractical. This is because, as the diameter increases for higher throughput, the radial force on the spring increases by the square of the diameter, thus as the size increases the spring design becomes uneconomic. In order to overcome such problems, the helical spring could either be made of tubular design or made of lighter materials.

However, this would result in substantially increased cost of manufacture. In practice, springs cannot be used at diameters greater than 250mm.

With this structure the rotation of the ends against the torsion of the spring is always in the same direction so the fibres always are twisted in the same direction around the longitudinal axis of the apparatus. This can be disadvantageous in the backwashing procedure.

It would be desirable therefore to provide an apparatus which overcame the above disadvantages and had sufficient radial strength to enable the filtration and coalescence to be performed at a higher throughput of liquid in an economic and efficient manner.

In addition we now impose a more rigorous backwash routine on the filter elements in order to have a greater efficiency of backwashing. With the increased backwashing strength there is a much greater strain on the support and we have found that with a spring as the support there is a danger of fatigue failure.

We have now found that replacing the helical spring with a cage configuration provides an apparatus which overcomes the aforementioned disadvantages of the helical spring.

The apparatus of the present invention can also be used as a coalescer to cause drops or droplets of one liquid dispersed in another immiscible liquid to coalesce and thus be more easily separated. Coalescers are used to separate hydrocarbon oils from water, although they have been used to separate many other dispersions comprising two substantially immiscible liquids.

The present invention provides an apparatus which can be used for removing contaminants from a liquid and for coalescing droplets of a liquid dispersed in another immiscible liquid, which apparatus comprises a casing divided into two compartments by a substantially tubular fibrous filter, the said fibrous filter being formed by bundles of fibres attached at each end to an end support, there being a liquid inlet leading to one side of the fibrous filter and a liquid outlet leading from the other side of the fibrous filter, the said end supports being moveable axially relative to each other and rotatable relative to each other about the longitudinal axis of the tubular fibrous filter, there being a cage assembly comprising a plurality of rings located within the fibrous filter adapted to support the fibres forming the fibrous filter, which cage structure is not attached to at least one of the end supports.

The cage assembly is preferably in contact with the fibres forming the fibrous filter to support the fibres so as to resist the inward movement of the fibres caused when the end supports are moved axially towards each other and rotated to twist the fibres; this movement tends to close the compartment surrounded by the tubular filter.

One of the end supports is preferably connected to an actuating rod so that this end support can be moved axially towards and away from the other end support. This actuating rod can also rotate the end support to which it is connected relative to the other end support, about the longitudinal axis of the tubular fibrous filter.

The cage assembly consists of a series of rings, preferably arranged along a common axis. The rings can be attached to one end support or remain unconnected.

The cage can comprise one or more sets of rings connected to each other; in one embodiment the cage comprises two parts, each part consisting of a plurality of rings.

The gaps between the rings are preferably of a distance to give adequate support to the fibres without too great an effect on the flow of liquid through the filter element when the equipment is in operation.

The rings forming the cage are preferably of the same diameter and can be made of any suitable material, e.g. stainless steel; optionally the rings can be of a hollow tubular construction.

The rings forming the cage structure can, if necessary, be located in position by means of radially located supports and/or longitudinally arranged supports can be used.

In one embodiment of the invention, the cage structure comprises two parts, each part consisting of several rings and can be the same or different in length.

The actuating rod can move the end support of the apparatus, to which it is connected, towards the other end support so that the first part of the cage assembly attached to this end support is also moved towards the second part of the cage assembly. In this position, the apparatus is in the position for filtration, providing a packed fibrous arrangement. The cage assembly provides full support for the tubular filter.

In use, the end supports are placed in their operational position with the fibres supported on the cage so as to form the fibrous filter. Liquid passes through the inlet through the fibres which act in the conventional way.

When it is desired to backwash the filter element, the end supports are moved away from each other and the fibres untwisted. This movement of the end supports causes the gaps to increase between the cage or part of the cage and one or more end supports (depending on to which end support the cage or parts of the cage are attached), thus allowing greater flow of liquid. Liquid is then passed through the filter element in the reverse direction (i.e. through the outlet and out through the inlet) to backwash the filter element and remove contaminants on the fibres.
In use, the filter apparatus, according to the present invention, is operated in the general manner disclosed in EP 360601.

A specific embodiment of the present invention will now be illustrated by reference to the accompanying drawings in which:-
Fig. 1 cross-section through an apparatus not according to the invention, shown in the packed configuration
Fig. 2 is in the fully extended position and
Fig. 3 is an embodiment of the invention in the extended position.

The apparatus comprises a casing (1) divided into two compartments by a tubular fibrous filter indicated as (2). The fibrous filter comprises bundles of fibres secured at each end-to-end supports (3) and (4). End support (3) is fixed to the casing via (5). End support (4) is attached to an actuating rod (6) to enable it to be moved axially towards end support (3) and also rotated relative to end support (3). A liquid inlet (7) is provided in casing (1) opening into the compartment surrounding the tubular filter. A liquid outlet (8) is provided in the base of the casing opening into the compartment located within the tubular filter.

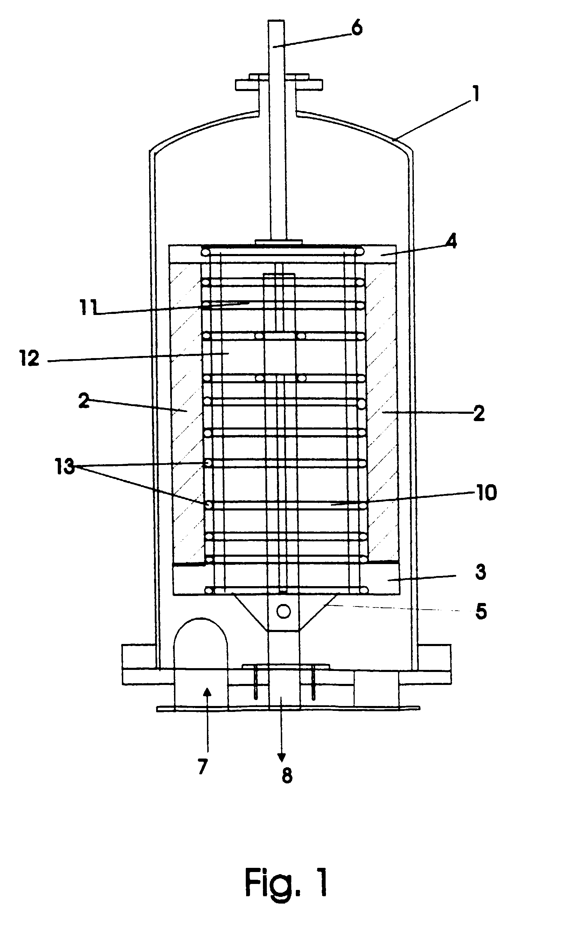

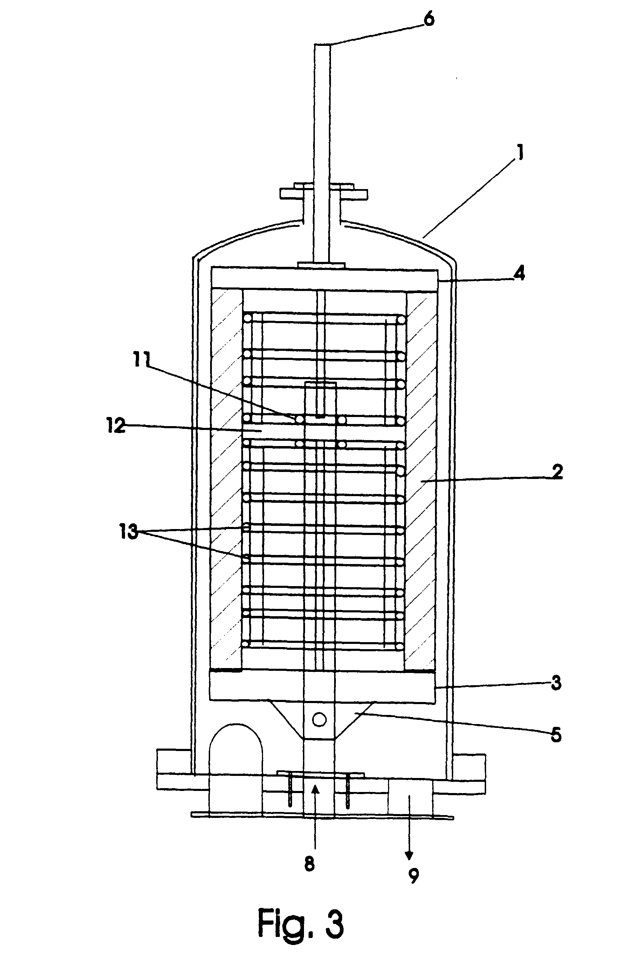

A cage structure comprising a number of circular rings (13) is located inside the tubular filter and comprises two parts, a fixed part (10) and a movable part (11). According to the invention, the fixed part (10) is attached to end support (3). The movable part is attached to the end support (4) and may be moved towards and away from the fixed part by means of the actuating rod (6). According to Fig. 1, the cage structures (10) and (11) are not fixed to the end supports (3) and (4) but are in the form of a "floating cage", as shown in fig. 3.

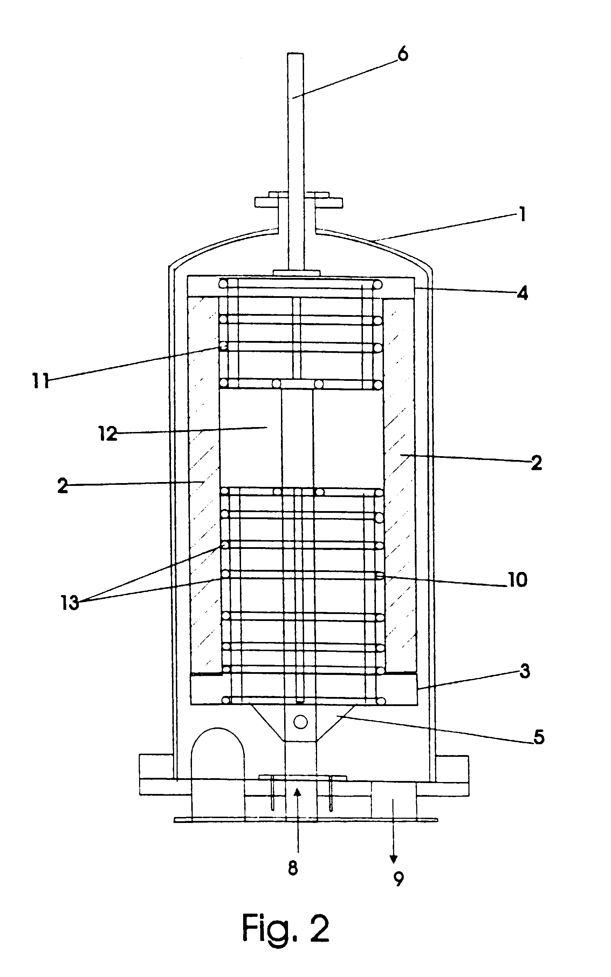

In the position shown in Fig. 1, the movable part (11) has been moved so that the gap (12) between the two parts is substantially equal to the gaps between the circular rings (13) which make up each part of the cage structure. The filter apparatus is now in its packed position suitable for filtration. In the position shown in Fig. 2, the gap (12) has been increased by moving part (11) away from part (10) and the filter apparatus is in its fully extended position suitable for backwashing.

## Claims

1. An apparatus for removing contaminants from a liquid and for coalescing droplets of a liquid dispersed in another immiscible liquid, which apparatus comprises a casing (1) divided into two compartments by a substantially tubular fibrous filter (2), the said fibrous filter being formed by bundles of fibres attached at each end to an end support (3, 4), there being a liquid inlet (8) leading to one side of the fibrous filter and a liquid outlet (9) leading from the other side of the fibrous filter, the said end supports being movable axially relative to each other and rotatable relative to each other about the longitudinal axis of the tubular fibrous filter, characterised in that there is a cage assembly (10) comprising a plurality of rings (13) located within the fibrous filter adapted to support the fibres forming the fibrous filter which cage structure is not attached to at least one of the end supports.

2. Apparatus as claimed in Claim 1, characterised in that the cage assembly (10) is in contact with the fibres forming the fibrous filter to support the fibres so as to resist the inward movement of the fibres caused when the end supports are moved axially towards each other and rotated to twist the fibres.

3. Apparatus as claimed in Claim 1 or 2, characterised in that one of the end supports (4) is connected to an actuating rod (6) which can move this end support axially towards and away from the other end support (3) and rotate this end support about the longitudinal axis of the tubular fibrous filter.

4. Apparatus as claimed in any one of Claims 1 to 3, characterised in that the cage assembly consists of a series of rings (13) arranged along a common axis.

5. Apparatus as claimed in Claim 4, characterised in that the rings (13) are not connected to either end support.

6. Apparatus as claimed in any one of Claims 1 to 5, characterised in that the cage comprises at least one set of rings (13) comprising a plurality of rings connected to each other.

7. Apparatus as claimed in Claim 6, characterised in that the cage comprises two sets of rings.

8. Apparatus as claimed in Claim 7, characterised in that neither of the sets of rings are connected to an end support.

9. Apparatus as claimed in any one of Claims 4 to 8, characterised in that the gaps (12) between the rings (13) in each set are of a distance to give adequate support to the fibres without too great an effect on the flow of liquid through the filter element when the equipment is in operation.

10. Apparatus as claimed in any one of Claims 4 to 8, characterised in that the rings (13) forming the cage structure are located in position by means of radially and/or longitudinally arranged supports.

## Patentansprüche

1. Vorrichtung zum Entfernen von Verunreinigungen aus einer Flüssigkeit und zum Koaleszieren von Tröpfchen einer Flüssigkeit, die in einer anderen unvermischbaren Flüssigkeit dispergiert ist, wobei die Vorrichtung ein Gehäuse (1), das in zwei Teilräume durch ein im wesentlichen röhrenförmigen Faserfilter (2) unterteilt ist, umfaßt, wobei besagter Faserfilter durch Faserbündel gebildet ist, die an jedem Ende an einem Endenhalter (3,4) befestigt sind, es einen Flüssigkeitseinlaß (8), der zu einer Seite des Faserfilters führt, und einen Flüssigkeitsauslaß (9), der von der anderen Seite des Faserfilters wegführt, gibt, die besagten Endenhalter relativ zueinander axial bewegbar sind und relativ zueinander um die Längsachse des röhrenförmigen Faserfilters drehbar sind, dadurch gekennzeichnet, daß es ein Käfigsystem (10) gibt, das eine Vielzahl von Ringen (13) umfaßt, die sich innerhalb des Faserfilters befinden und so gestaltet sind, das sie die Fasern, die den Faserfilter bilden, tragen, wobei die Käfigstruktur nicht an zumindest einem der Endenhalter befestigt ist.

2. Vorrichtung nach Anspruch 1, dadurch gekennzeichnet, daß das Käfigsystem (10) in Kontakt mit den Fasern ist, die den Faserfilter bilden, um die Fasern zu tragen, damit er der nach innen gerichteten Bewegung der Fasern standhält, die verursacht wird, wenn die Endenhalter axial zueinander bewegt werden und sich drehen, um die Fasern zu verdrehen.

3. Vorrichtung nach Anspruch 1 oder 2, dadurch gekennzeichnet, daß einer der Endenhalter (4) mit einem Betätigungsstab (6) verbunden ist, der diesen Endenhalter axial zu dem anderen Endenhalter (3) und von diesem weg bewegen und diesen Endenhalter um die Längsachse des röhrenförmigen Faserfilters drehen kann.

4. Vorrichtung nach einem der Ansprüche 1 bis 3, dadurch gekennzeichnet, daß das Käfigsystem aus einer Reihe von Ringen besteht, die entlang einer gemeinsamen Achse angeordnet sind.

5. Vorrichtung nach Anspruch 4, dadurch gekennzeichnet, daß die Ringe (13) nicht mit beiden Endenhaltem verbunden sind.

6. Vorrichtung nach einem der Ansprüche 1 bis 5, dadurch gekennzeichnet, daß der Käfig zumindest eine Gruppe von Ringen (13) umfaßt, die eine Vielzahl von Ringen umfaßt, die miteinander verbunden sind.

7. Vorrichtung nach Anspruch 6, dadurch gekennzeichnet, daß der Käfig zwei Gruppen von Ringen umfaßt.

8. Vorrichtung nach Anspruch 7, dadurch gekennzeichnet, daß keine der Gruppen von Ringen mit einem Endenhalter verbunden sind.

9. Vorrichtung nach einem der Ansprüche 4 bis 8, dadurch gekennzeichnet, daß die Zwischenräume (12) zwischen den Ringen (13) in jeder Gruppe einen Abstand haben, der eine ausreichende Stützung der Fasern ohne zu große Wirkung auf den Fluß der Flüssigkeit durch das Filterelement ergibt, wenn das Gerät in Betrieb ist.

10. Vorrichtung nach einem der Ansprüche 4 bis 8, dadurch gekennzeichnet, daß die Ringe (13), die die Käfigstruktur bilden, sich an der richtigen Stelle mittels radial und/oder längs angeordneter Träger befinden.

## Revendications

1. Appareil destiné à éliminer des contaminants d'un liquide et pour faire coalescer des gouttelettes d'un liquide dispersé dans un autre liquide non miscible, appareil qui comprend une enceinte (1) divisée en deux compartiments par un filtre fibreux essentiellement tubulaire (2), ledit filtre fibreux étant constitué de faisceaux de fibres fixés au niveau de chaque extrémité à un support d'extrémité (3, 4), présentant un orifice d'entrée de liquide (8) conduisant vers un côté du filtre fibreux et un orifice de sortie de liquide (9) conduisant à partir de l'autre côté du filtre fibreux, lesdits supports d'extrémité étant axialement mobiles l'un par rapport à l'autre et pouvant tourner l'un par rapport à l'autre autour de l'axe longitudinal du filtre fibreux tubulaire, caractérisé en ce qu'il existe un assemblage de compartiments (10) comprenant une pluralité d'anneaux (13) placée dans le filtre fibreux et adaptée pour supporter les fibres formant le filtre fibreux, structure en compartiments qui n'est pas fixée à l'un au moins des supports d'extrémité.

2. Appareil selon la revendication 1, caractérisé en ce que l'assemblage de compartiments (10) est en contact avec les fibres formant le filtre fibreux afin de supporter les fibres de façon à résister au mouvement vers l'intérieur des fibres provoqué lorsque les supports d'extrémité se déplacent axialement l'un vers l'autre et tournent en vue de tordre les fibres.

3. Appareil selon la revendication 1 ou 2, caractérisé en ce que l'un des supports d'extrémité (4) est connecté à une tige d'actionnement (6) qui peut déplacer ce support d'extrémité axialement vers, et à distance de, l'autre support d'extrémité (3) et faire tourner ce support d'extrémité autour de l'axe longitudinal du filtre fibreux tubulaire.

4. Appareil selon l'une quelconque des revendications 1 à 3, caractérisé en ce que l'assemblage de compartiments est constitué d'une série d'anneaux (13) disposée le long d'un axe commun.

5. Appareil selon la revendication 4, caractérisé en ce que les anneaux (13) ne sont connectés pas à l'un ou à l'autre support d'extrémité.

6. Appareil selon l'une quelconque des revendications 1 à 5, caractérisé en ce que le compartiment comprend au moins un ensemble d'anneaux (13) comprenant une pluralité d'anneaux connectés l'un à l'autre.

7. Appareil selon la revendication 6, caractérisé en ce que le compartiment comprend deux ensembles d'anneaux.

8. Appareil selon la revendication 7, caractérisé en ce que ni l'un ni l'autre des ensembles d'anneaux n'est connecté à un support d'extrémité.

9. Appareil selon l'une quelconque des revendications 4 à 8, caractérisé en ce que les intervalles (12) entre les anneaux (13) de chaque ensemble se trouvent à une distance conférant un support adéquat aux fibres sans affecter trop fortement l'écoulement de liquide à travers l'élément de filtre lorsque le dispositif fonctionne.

10. Appareil selon l'une quelconque des revendications 4 à 8, caractérisé en ce que les anneaux (13) constituant la structure en compartiments sont mis en place au moyens de supports disposés radialement et/ou longitudinalement.
